# EUROPEAN PATENT APPLICATION

(11) **EP 0 852 333 A2**
(43) Date of publication of application: **08.07.1998**
(21) Application number: 97303356.6
(22) Date of filing: 16.05.1997
(51) Int. Cl.: G01N 21/88

(54) **Method and apparatus for detecting glue on box blanks**

(30) Priority: 06.01.1997 US 779056
(71) Applicant: THE INTERNATIONAL PAPER BOX MACHINE CO.INC., Nashua New Hampshire 03061-0787 (US)
(72) Inventor: Girard, Alfred L., Amherst, New Hampshire 03031 (US)
(74) Representative: Downey, William Gerrard

(57) **Abstract**

A method and apparatus for detecting the presence or absence of white glue on a white background of a box blank being processed on a box blank folding machine using a laser scanner. The laser scanner directs a continuous beam of light at approximately a 20 degree angle of incidence from the horizontal to a white glue bead, and reflection of the light beam from the glue bead is detected by a receiver. The receiver generates a signal which is processed by a pulse processor. If no glue is present on the white surface, then there is no reflected light detected. The same method and apparatus is also used to detect embossing on box blanks.

## Description

### Background of the Invention

### Field of the Invention

The present invention relates to a method and apparatus for detecting glue on flaps of box blanks moving at various line speeds on a paper box folding machine and in particular to a method for detecting white glue on white box blanks.

### Description of Related Art

During the manufacture of paper boxes, paper box blanks advance along a paper line pathway for diverse folding and gluing or sealing operations. The paper blanks may have "score lines" that divide the blank into sections called "panels" and "flaps". During folding operations, the sections are folded about the score lines to produce the sides, top and bottom of a completed box. In one such folding and gluing operation, a portion of the edge flap thickness is cut away and then folded back on itself. It is then folded into a partially overlapping relationship over central, adjoining panels of a blank along certain score lines. The flaps and panels of the blank are glued or otherwise sealed to produce a completed structure in the form of a folded box.

During the processing of the paper box blanks, glue is applied to a portion of the flaps as the box blanks move along a paper line at speeds of approximately 2000 belt feet per minute (BFM). After the glue is applied to the box blanks, the box blanks are folded, compressed and the glue dries. If the box is improperly glued, the box may come apart when carrying a product resulting in damages to the product. Therefore, it is desirable to have a method of glue detection immediately after the glue is applied on the box blank folding machine.

In the prior art several techniques have been used for detecting glue. In U.S. Patent No. 4,704,603, issued to Neil K. Edwards, on November 3, 1997, a glue detecting system is disclosed using linear filament lamps and photodiodes mounted in the ends of nonreflective tubes to distinguish between diffuse and specular reflections from the surface of a moving box blank. However, it is more complicated to separate diffused and specular reflections and reference elements are required.

In U. S. Patent No. 4,215,939, issued to John W. Miller, on August 5, 1980, a glue drop detector is disclosed for determining if a glue drop is present on the reflective inner surface of a closure. Collimated light is projected onto the reflective inner surface of the closure, and a measurement is taken of the amount of light which remains collimated after reflection from the closure. More light is reflected from a closure without a glue drop than with a glue drop. However, this technique requires complicated apparatus and optics including a beam splitter.

In U. S. Patent No. 3,588,513, issued to Hiroo A. Takatsuki, on June 28, 1971, a method is disclosed using a narrow light beam from a gas laser light source for detecting a defective condition in the sheet material passing close to the light source. The light beam travels close to and across the surface of the sheet material. An interruption (blockage) of the light beam indicates a defective condition. However, the technique is not applicable for use with the present paper box folding machine because the conveyor does not accommodate the required mounting position from the laser transmitted and received.

Other techniques have involved the use of ultraviolet sensitive material in glue which are illegal in most countries especially for use in packaging food.

### Summary

Accordingly, it is therefore an object of this invention to provide a method and apparatus for detecting the presence of glue on a box blank during the gluing operation on a paper box folding machine.

It is also an object of this invention to provide a method and apparatus for detecting the presence of white glue on a white box blank as the box blank is proceeding along a paper line of a paper box folding machine.

It is another object of this invention to provide a method and apparatus for detecting a concave or a convex embossing on a box blank as the box blank is proceeding through a paper box folding machine.

The objects are further accomplished by a method for detecting glue on a box blank being processed in a paper box blank folding machine comprising the steps of moving the box blank along a paper line in the machine, applying glue to the box blank at predetermined locations, transmitting a laser beam to the predetermined locations on the box blank having the applied glue, the laser beam being transmitted at a predetermined angle, sensing reflections of the laser beam from the glue by receiving means, and processing an output signal from the laser beam reflection receiving means for verifying the presence of glue on the predetermined locations. The step of applying glue to the box blank at predetermined locations comprises the step of applying the glue to edge flaps. The step of transmitting a laser beam to the predetermined locations comprises the step of using a laser scanner. The step of processing an output signal from the laser beam reflections receiving means comprises the step of identifying a box blank not having glue on the predetermined locations. The step of applying glue to the box blank includes the step of applying white glue to white box blanks.

The objects are further accomplished in a paper box blank folding machine for forming individually and successively planar box blanks into folded boxes, by apparatus for detecting glue on the box blanks comprising means for moving the box blanks along a paper line, means for applying glue to each of the box blanks at predetermined locations, means for transmitting a laser beam to the predetermined locations on the box blanks at a predetermined angle, means for receiving a reflected laser beam from the glue at the predetermined location, means for processing an output signal from the laser beam receiving means to verify the presence of the glue on the predetermined locations. The glue applied to the box blanks includes applying the glue to edge flaps of the box blanks. The transmitting means comprises a laser scanner. The processing means comprises means for generating a signal for identifying a box blank not halving glue on the predetermined locations. The predetermined angle for the laser beam relative to a horizontal plane of the box blanks comprises approximately twenty degrees. The applied glue comprises white glue, and the box blanks comprise white box blanks.

The objects are further accomplished by a method for detecting embossing on a box blank being processed in a paper box blank folding machine comprising the steps of moving the box blank having embossing at predetermined locations along a paper line in the machine, transmitting a laser beam to the predetermined locations on the box blank having the embossing, the laser beam being transmitted at a predetermined angle, sensing reflections of the laser beam from the embossing by receiving means, and processing an output signal from the laser beam reflections receiving means for verifying the presence of embossing on the predetermined locations. The step of transmitting a laser beam to the predetermined locations comprises the step of using a laser scanner. The step of processing an output signal from the laser beam reflections receiving means comprises the step of identifying a box blank not having embossing on the predetermined locations. The step of sensing reflections from the embossing includes the step of sensing concave embossing and/or convex embossing on the box blank.

The objects are further accomplished in a paper box blank folding machine for forming individually and successively planar box blanks into folded boxes, by apparatus for detecting embossing on the box blanks comprising means for moving the box blanks having embossing at predetermined locations along a paper line, means for transmitting a laser beam to the predetermined locations on the box blanks at a predetermined angle, means for receiving a reflected laser beam from the embossing at the predetermined locations, and means for processing an output signal from the laser beam receiving means for verifying the presence of the embossing on the predetermined locations. The transmitting means comprises a laser scanner. The processing means comprises means for generating a signal for identifying a box blank not having embossing on the predetermined locations. The predetermined angle for transmitting the laser beam relative to a horizontal plane of the box blanks comprises approximately twenty degrees. The means for sensing reflections from the embossing on the box blanks includes detecting concave embossing and/or convex embossing.

### Brief Description of the Drawings

The appended claims particularly point out and distinctly claim the subject matter of this invention. The various objects, advantages and novel features of this invention will be more fully apparent from a reading of the following detailed description in conjunction with the accompanying drawings in which like reference numerals refer to like parts, and in which:
FIG. 1 is a perspective view of a box blank folding machine showing glue being applied to box flaps and a laser scanner positioned on the machine to sense if glue was applied;
FIG. 2 is a side view of the laser scanner positioned on the box blank folding machine at an angle to detect the presence of glue applied to the flaps of box blanks; and
FIG. 3 is a perspective view of a box blank which typically moves along a paper line of a paper box folding machine of FIG. 1 showing convex embossing on the box blank left side and concave embossing on the right side.

### Description of Illustrative Embodiments

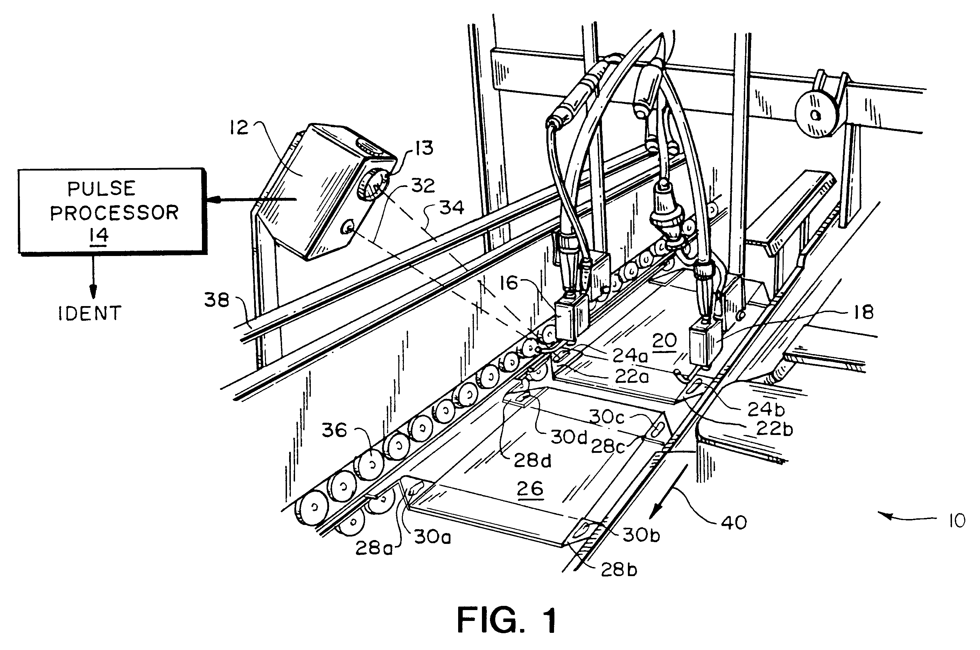

Referring to FIG. 1, a gluing section of a paper box folding machine 10 is shown comprising the invention of a method and apparatus for detecting glue on box blanks 20, 26. Box blanks 20, 26 advance along a paper line pathway in a direction indicated by the arrow 40. The box blanks 20, 26 are generally made of cardboard and have score lines for dividing the box blanks 20, 26 into sections called "panels" and "flaps". During the folding operation, the sections are folded about the score lines to produce the sides, top and bottom of a box. In one such folding and gluing operation, a portion of the edge flap thickness is cut away and then folded back on itself.

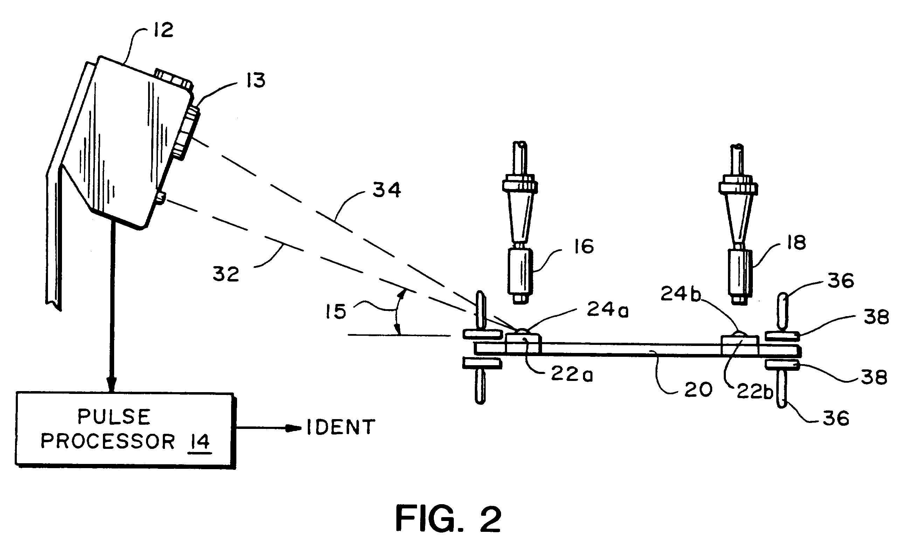

Referring now to FIG. 1 and FIG. 2, in FIG. 1 strips of glue 30a, 30b, 30c, 30d have been applied to the edge flaps 28a, 28b, 28c and 28d of box blank 26. On box blank 20 two glue strips 24a and 24b are applied to edge flaps 22a and 22b respectively by overhead glue guns 16, 18. FIG. 2 shows a side view of a laser scanner 12 positioned on the box blank folding machine 10 outside and slightly above the paper line, and the laser scanner 12 transmits a laser beam 32 at approximately a twenty degree angle 15 relative the horizontal plane of the box blank paper line toward the glue strip 24a. When the laser beam 32 strikes the glue strip 24a, it is reflected 34 back to a receiver section 13 of the laser scanner 12. If there is no glue on the edge flap 22a, then the laser beam 32 is not reflected back to the laser receiver section 13. A pulse processor 14 is connected to an output of the laser scanner 12 and keeps track of the detection of no glue on the predetermined location such as the edge flap 22a. The output (IDENT) from the pulse processor 14 may be connected to stop the paper line or trigger a spray to be applied to the detected box blank not having glue for identification. The laser scanner 12 may be embodied by Model No. KT5L-P3611 manufactured by Sick Optic-Electronic of Waldkirch, Germany.

This method and apparatus for detecting glue on box blanks is particularly applicable to the detection of white glue on a white cardboard box blank. In order to test the flaps for glue on the right side of the box blank folding machine 10 of FIG. 1, another laser scanner (not shown) would be positioned adjacent to laser scanner 12 and aimed at the right edge flaps 22b or positioned on the right side similar to the laser scanner 12 on the left side. The pulse processor 14 would then be expanded to also track the output signal from the second laser scanner.

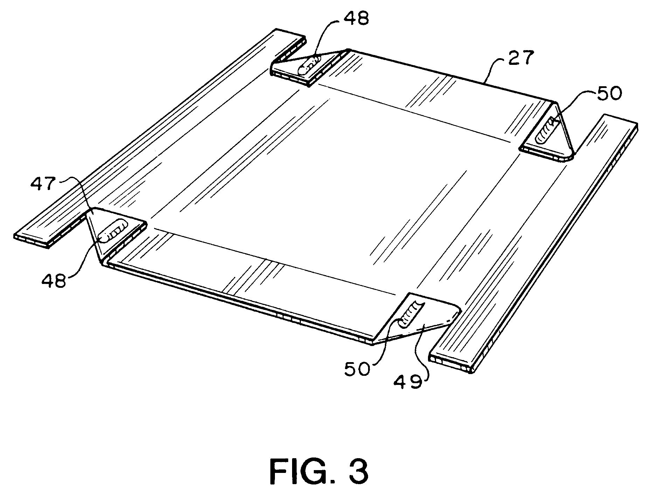

Referring again to FIGS. 1 and 2, the identification signal (IDENT) output from the pulse processor 14 provides information about the inspection of box blanks 20, 26 and about embossed and folded boxes 27 (FIG. 3). This inspection information for example, may be coupled to an apparatus for inspecting box blanks as described in the Description of the Preferred Embodiments (pages 12-24) of U.S. Patent Application Serial No. 08/655,256 filed June 5, 1996 and assigned to the same Assignee as the present application, International Paper Box Machine Company, Inc. of Nashua, New Hampshire, which is incorporated herein by reference. The IDENT signal may be sent to a system controller as described therein which controls inputs from several sensors and then to a processor where identification of a faulty carton would be determined followed by action taken such as to stop the conveyor on which the boxes or box blanks are moving or to mark or remove a defective box.

Referring to FIG. 3, a perspective view is shown of a box blank having embossing which typically moves along a paper line of the paper box folding machine 10. There may be two types of embossing, such as concave and convex. In FIG. 3, an edge flap 47 comprises the concave embossing 48 and an edge flap 49 comprises the convex embossing 50. The laser scanner 12 detects the presence or absence of the concave embossing 48 or convex embossing 50 in a similar manner as detecting the glue of FIG. 1. The laser scanner 12 is aimed at approximately a twenty degree angle 15 relative to the horizontal plane of the box blank 27 and at the predetermined embossed location on the box blank 27. When embossing is detected by the laser beam 32, it is reflected back to the receiver section 13 of the laser scanner 12, and the signal from the receiver section 13 is processed by the pulse processor 14. If there is no embossing detected on the box blank 27, then the laser beam 32 is not reflected back to the receiver section 13.

This invention has been disclosed in terms of certain embodiments. It will be apparent that many modifications can be made to the disclosed apparatus without departing from the invention. Therefore, it is the intent of the appended claims to cover all such variations and modifications as come within the true spirit and scope of this invention.

## Claims

1. A method for detecting glue on a box blank being processed in a paper box blank folding machine comprising the steps of:
moving said box blank along a paper line in said machine;
applying glue to said box blank at predetermined locations;
transmitting a laser beam to said predetermined locations on said box blank having said applied glue, said laser beam being transmitted at a predetermined angle;
sensing reflections of said laser beam from said glue by receiving means; and
processing an output signal from said laser beam reflection receiving means for verifying the presence of glue on said predetermined locations.

2. The method as recited in Claim 1 wherein said step of applying glue to said box blank at predetermined locations comprises the step of applying said glue to edge flaps.

3. The method as recited in Claim 1 wherein said step of transmitting a laser beam to said predetermined locations comprises the step of using a laser scanner.

4. The method as recited in Claim 1 wherein said step of processing an output signal from said laser beam reflections receiving means comprises the step of identifying a box blank not having glue on said predetermined locations.

5. The method as recited in Claim 1 wherein said step of applying glue to said box blank includes the step of applying white glue to white box blanks.

6. In a paper box blank folding machine for forming individually and successively planar box blanks into folded boxes, apparatus for detecting glue on said box blanks comprising:
means for moving said box blanks along a paper line;
means for applying glue to each of said box blanks at predetermined locations;
means for transmitting a laser beam to said predetermined locations on said box blanks at a predetermined angle;
means for receiving a reflected laser beam from said glue at said predetermined location;
means for processing an output signal from said laser beam receiving means to verify the presence of said glue on said predetermined locations.

7. The apparatus as recited in Claim 6 wherein said glue applied to said box blanks includes applying said glue to edge flaps of said box blanks.

8. The apparatus as recited in Claim 6 wherein said transmitting means comprises a laser scanner.

9. The apparatus as recited in Claim 6 wherein said processing means comprises means for generating a signal for identifying a box blank not having glue on said predetermined locations.

10. The apparatus as recited in Claim 6 wherein said predetermined angle for transmitting said laser beam relative to a horizontal plane of said box blanks comprises approximately twenty degrees.

11. The apparatus as recited in Claim 6 wherein said applied glue comprises white glue; and
said box blanks comprise white box blanks.

12. A method for detecting embossing on a box blank being processed in a paper box blank folding machine comprising the steps of:
moving said box blank having embossing at predetermined locations along a paper line in said machine;
transmitting a laser beam to said predetermined locations on said box blank having said embossing, said laser beam being transmitted at a predetermined angle;
sensing reflections of said laser beam from said embossing by receiving means; and
processing an output signal from said laser beam reflections receiving means for verifying the presence of embossing on said predetermined locations.

13. The method as recited in Claim 12 wherein said step of transmitting a laser beam to said predetermined locations comprises the step of using a laser scanner.

14. The method as recited in Claim 12 wherein said step of processing an output signal from said laser beam reflections receiving means comprises the step of identifying a box blank not having embossing on said predetermined locations.

15. The method as recited in Claim 12 wherein said step of sensing reflections from said embossing includes the step of sensing concave embossing on said box blank.

16. The method as recited in Claim 12 wherein said step of sensing reflections from said embossing includes the step of sensing convex embossing on said box blank.

17. In a paper box blank folding machine for forming individually and successively planar box blanks into folded boxes, apparatus for detecting embossing on said box blanks comprising:
means for moving said box blanks having embossing at predetermined locations along a paper line;
means for transmitting a laser beam to said predetermined locations on said box blanks at a predetermined angle;
means for receiving a reflected laser beam from said embossing at said predetermined locations; and
means for processing an output signal from said laser beam receiving means for verifying the presence of said embossing on said predetermined locations.

18. The apparatus as recited in Claim 17 wherein said transmitting means comprises a laser scanner.

19. The apparatus as recited in Claim 17 wherein said processing means comprises means for generating a signal for identifying a box blank not having embossing on said predetermined locations.

20. The apparatus as recited in Claim 17 wherein said predetermined angle for transmitting said laser beam relative to a horizontal plane of said box blanks comprises approximately twenty degrees.

21. The apparatus as recited in Claim 17 wherein said means for sensing reflections from said embossing on said box blanks includes detecting concave embossing.

22. The apparatus as recited in Claim 17 wherein said means for sensing reflections from said embossing on said box blanks includes detecting convex embossing.
